# EUROPÄISCHE PATENTSCHRIFT

(11) **EP 4 019 931 B1**
(45) Veröffentlichungstag und Bekanntmachung des Hinweises auf die Patenterteilung: **31.07.2024**
(21) Anmeldenummer: 21210992.0
(22) Anmeldetag: 29.11.2021
(51) Int. Cl.: G01N 1/40

(54) **EXTRAKTIONSSYSTEM ZUR EXTRAKTION VON ANALYTEN AUS EINER PROBE**
EXTRACTION SYSTEM FOR EXTRACTING ANALYTES FROM A SAMPLE
SYSTÈME D'EXTRACTION DESTINÉ À L'EXTRACTION DES ANALYTES À PARTIR D'UN ÉCHANTILLON

(30) Priorität: 23.12.2020 DE 102020134836
(43) Veröffentlichungstag der Anmeldung: 29.06.2022
(73) Patentinhaber: LCTech GmbH, 84419 Obertaufkirchen (DE)
(72) Erfinder: BRANDLHUBER, Martin, 84427 St. Wolfgang (DE); AULWURM, Uwe, 84149 Velden/Vils (DE)
(74) Vertreter: Tetzner, Michael

(56) Entgegenhaltungen:
- WO-A1-94/08683
- DE-A1- 102013 114 132
- US-A- 5 601 707

## Beschreibung

Die Erfindung betrifft ein Extraktionssystem zur Extraktion von Analyten aus einer Probe.

Mit Hilfe von Extraktionssystemen werden üblicherweise unter erhöhter Temperatur und Druck entsprechende Analyten, z.B. Pestizide, PCB, PAK, Dioxine und andere Komponenten, aus einem zu untersuchenden Probenmaterial mit Hilfe von Lösungsmitteln extrahiert, die dann nach weiterer Reinigung einem Analysesystem zugeführt werden.

Das zu untersuchende Probenmaterial wird dabei zunächst in eine Extraktionszelle gegeben, die normalerweise einen rohrförmigen Extraktionskörper aufweist, dessen beide Enden über Verschlussanordnungen verschlossen sind, sodass sich ein Innenraum zur Aufnahme des zu untersuchenden Probenmaterials ergibt. Das Lösungsmittel oder ein anderes geeignetes Fluid wird über Zu- bzw. Abführöffnungen in den Verschlussanordnungen zu- bzw. abgeführt. Die Verschlussanordnungen werden vielfach mit dem Extraktionskörper verschraubt, wie dies beispielsweise aus der EP 2 918 323 A1 oder der EP 0 868 931 A1 bekannt ist.

Aus der EP 20 172 899.5 ist weiterhin eine Extraktionszelle der Anmelderin bekannt, bei der die Verschlussanordnungen jeweils wenigstens eine als permanentmagnetische Haftordnung oder als Klettverschluss oder als silikonbasierter Verschluss ausgebildete Haftanordnung zum Festhalten der Verschlussanordnungen am Extraktionskörper aufweisen.

Eine solche Haftanordnung hat den Vorteil, dass die Verschlussanordnungen nicht verschraubt, sondern lediglich aufgesetzt bzw. abgezogen werden muss. Dies vereinfacht das Handling der Extraktionszellen erheblich.

Die mit der Probe beladende Extraktionszelle wird dann in einer Einspanneinrichtung eingespannt, indem Spannbacken auf die beide Verschlusselemente der Extraktionszelle drücken und über eine Fluidverbindungseinrichtung eine Fluidverbindung mit den Zu- und/oder Abführöffnungen der Extraktionszelle herstellen. Beim eigentlichen Extraktionsverfahren wird sodann über eine Fluidzuführleitung das vorgesehene Fluid, beispielsweise ein Lösungsmittel ggf. unter Druck zugeführt, wobei die Extraktionszelle und damit die Probe zur beschleunigten Extraktion ggf. auf eine vorgegebene Temperatur erwärmt. Wobei sich Drücke von bis zu 100 bar und Temperaturen bis 200 °C einstellen können. Im Anschluss wird in der Fluidabführleitung ein Ventil geöffnet, um Extraktionslösung über die Fluidabführleitung abzuführen. Eine im Extraktionskörper eingesetzte Fritte hält dabei die Probe zurück und lässt lediglich das zugeführte Fluid zusammen mit den extrahierten Analyten passieren. Das abgeführte Fluid wird dann einer weiteren Bearbeitung und/oder Analyse unterzogen.

Anstelle des oben beschriebenen statischen Verfahrens können Extraktionszellen aber auch bei einem dynamischen Verfahren eingesetzt werden, bei dem das Extraktionsfluid die Extraktionszelle kontinuierlich durchströmt.

Bei automatisierten Systemen befinden sich eine Vielzahl von Extraktionszellen in einem Karussell oder Gestell und werden von dort automatisiert in die Einspannvorrichtung transferiert, dort verarbeitet und anschließend wieder zurückgeführt. Ein derartiges System ist beispielsweise aus der EP 0 820 334 B1 bekannt.

Eine weitere Einspannvorrichtung ist beispielsweise aus der EP 0 078 435 A2 bekannt. Die EP 2 767 828 B1 offenbart eine Einspannvorrichtung zum Einspannen von mehreren Säulen für eine Probenvorbereitung, die übereinander angeordnet werden. Dabei sind mehrere auf einer Führungsschiene gehalterte, gleitverschiebliche Spannblöcke vorgesehen, die über einen Verschiebemechanismus verstellt werden können, sodass mehrere Säulen in axialer Richtung hintereinander zwischen den Spannblöcken eingespannt werden können.

Die DE 696 35 777 T2 offenbart ein Extraktionssystem, bei dem die Extraktionszellen, die jeweils ein oberes und ein unteres abnehmbares Verschlusselement aufweisen, in einer Zellenschale gehalten werden und mittels einer Kolben-Zylinder-Anordnung zwischen der Zellenschale und einem Ofen bewegt werden kann.

Weiterhin beschreibt die US 5 601 707 A ein Extraktionssystem zur Extraktion von Analyten aus einer Probe gemäß dem Oberbegriff des Anspruchs 1, wobei die Extraktionszelle an einem Verschlussstopfen gehaltert ist und diese Einheit mittels eines Handgriffs in einen Druckbehälter eingeschoben und dort eingeschraubt wird. Der Druckbehälter ist dabei formschlüssig von einem Heizblock umgeben.

Der Erfindung liegt nun die Aufgabe zugrunde, das Handling der Extraktionszellen und insbesondere die Positionierung der Extraktionszelle in der Einspannvorrichtung eines Extraktionssystem zu vereinfachen, um Extraktionen bei erhöhten Temperaturen durchzuführen.

Erfindungsgemäß wird diese Aufgabe durch die Merkmale des Anspruches 1 gelöst.

Das erfindungsgemäße Extraktionssystem zur Extraktion von Analyten aus einer Probe besteht im Wesentlichen aus
- einer Extraktionszelle zur Aufnahme der Probe, die wenigstens einen ersten Fluidanschluss zum Zu- oder Abführen eines Fluids aufweist und
- einer Einspannvorrichtung zum Einspannen der Extraktionszelle und
- einer Fluidverbindungseinrichtung zur Herstellung einer Fluidverbindung mit dem wenigstens einen ersten Fluidanschluss der Extraktionszelle,
wobei ein Extraktionszellenhalter zum Aufnehmen der Extraktionszelle vorgesehen ist und die Einspannvorrichtung eine Führungs- und Positionierungsanordnung zum linearen Einschieben des Extraktionszellenhalters zusammen mit der Extraktionszelle aufweist, um die Extraktionszelle in einer Einschubstellung zu positionieren. Das Extraktionssystem weist zudem wenigstens zwei zwischen einer Öffnungsstellung und einer Heizstellung verstellbare Heizbacken auf, die in der Heizstellung mit der Extraktionszelle in Heizkontakt stehen

Die Positionierung der Extraktionszelle in der Einspannvorrichtung wird durch den Extraktionszellenhalter erheblich vereinfacht. Findet während der Extraktion ein Aufheizen der Extraktionszelle kann diese mit dem Extraktionszellenhalter auch in einem heißen Zustand herausgenommen werden, da die Extraktionszelle beim Entnehmen nicht unmittelbar angefasst werden muss und ein Abkühlen der Extraktionszelle nicht abgewartet werden muss.

Weitere Ausgestaltungen der Erfindung sind Gegenstand der Unteransprüche.

Die Extraktionszelle sieht vorzugweise einen rohrförmigen Extraktionskörper mit einem ersten und einem gegenüberliegenden zweiten Ende aufweist, der einen Innenraum zur Aufnahme der Probe vor und die Extraktionszelle weist weiterhin eine erste Verschlussanordnung zum abdichtenden Verschließen des ersten Endes des rohrförmigen Extraktionskörpers und eine zweite Verschlussanordnung zum abdichtenden Verschließen des zweiten Endes des rohrförmigen Extraktionskörpers auf.

Weiterhin kann die erste Verschlussanordnung den ersten Fluidanschluss und die zweite Verschlussanordnung einen zweiten Fluidanschluss zum Zu- oder Abführen eines Fluids aufweisen.

Der Extraktionszellenhalter kann insbesondere einen Aufnahmehalter zur Halterung der Extraktionszelle und einen Handhabungsgriff zum Einschieben und Herausziehen des Extraktionszellenhalters in und aus dem Extraktionssystem umfassen.

Gemäß einem bevorzugten Ausführungsbeispiel weist die Führungs- und Positionierungsanordnung weiterhin wenigstens ein Verriegelungselement auf, das in der Einschubstellung des Extraktionszellenhalters mit diesem in einer Verriegelungsstellung steht. Idealerweise wird das Verriegelungselement mit einer Feder vorgespannt, sodass die Verriegelung in der Einschubstellung selbsttätig erfolgt. Zum Verstellen des Verriegelungselements von der Verriegelungsstellung in einer Öffnungsstellung kann ein Auslöselement vorgesehen werden, das beispielsweise durch einen Elektromagneten oder einen mechanischen Druckknopf gebildet wird.

Durch die wenigstens zwei zwischen einer Öffnungsstellung und einer Heizstellung verstellbaren Heizbacken, die in der Heizstellung mit der Extraktionszelle in Heizkontakt stehen, können Extraktionen durchgeführt werden, die bei erhöhten Temperaturen von beispielsweise 30 bis 200 °C durchgeführt werden. Da die Extraktionszellen üblicherweise zylindrisch sind, werden die Heizbacken vorzugsweise halbschalenförmig ausgebildet, sodass die Heizbacken die Extraktionszelle in der Heizstellung formschlüssig umschließen, um eine gute Wärmeübertragung zu gewährleisten. Zur Anpassung der wenigstens zwei Heizbacken an kleinere Durchmesser der Extraktionszellen können darüber hinaus Adapterstücke vorgesehen werden, die zur Befestigung an den Heizbacken ausgebildet sind. Diese Adapterstücke können dabei beispielsweise auf die Heizbacken aufgeschoben werden. Sie sollten darüber hinaus aus einem gut wärmeleitenden Material bestehen.

Um die Heizbacken von der Öffnungsstellung in die Heizstellung zu verstellen, ist vorzugsweise eine Verstellmechanik vorgesehen, die während des linearen Einschiebens des Extraktionszellenhalters mit diesem zum Verstellen der Heizbacken in Wirkkontakt kommt bzw. steht. Auf diese Weise werden mit der Einschubbewegung des Extraktionszellenhalters neben der Positionierung der Extraktionszelle gleichzeitig die Heizbacken um die Extraktionszelle geschlossen.

Das Einschieben der Extraktionszelle mittels des Extraktionszellenhalters erfolgt in einer linearen Bewegung und ist in zwei funktionale Wegstrecken unterteilt. Zum einen wird die Extraktionszelle zunächst im Einspannsystem des Extraktionssystems bei noch geöffneten Heizbacken positioniert. In einer weiteren Bewegung von Teilen des Extraktionshalters wird die Extraktionszelle verriegelt und die Heizbacken werden um die Extraktionszelle geschlossen. Anschließend wird die Extraktionszelle, die üblicherweise vertikal ausgerichtet ist, eingespannt, wobei über die Fluidverbindungseinrichtung eine Fluidverbindung mit dem wenigstens einen ersten Fluidanschluss der Extraktionszelle hergestellt wird. In dieser Stellung kann die Extraktionszelle gewünschtenfalls mit Temperaturen von bis zu 200°C und einem erhöhten Druck von bis zu 100 bar beaufschlagt werden. Die sich um die Extraktionszelle schließenden Heizbacken sind vorzugsweise gefedert und erzeugen so einen definierten Anpressdruck auf die Extraktionszelle, um einen idealen Wärmeübergang zu gewährleisten und um gleichzeitig etwaige Fertigungstoleranzen der Extraktionszellen ausgleichen zu können.

Die Heizbacken sind vorzugsweise jeweils um eine Drehachse drehbar gelagert, wobei die Verstellmechanik die lineare Einschubbewegung des Extraktionszellenhalters in eine Drehung der Heizbacken um ihre Drehachsen umsetzt. Die Heizeinrichtung kann ferner wenigstens ein Federelement zum Öffnen der Heizbacken von der Heizstellung in die Öffnungsstellung aufweisen, wobei das wenigstens eine Federelement derart angeordnet ist, dass es bei der Verstellung der Heizbacken von der Öffnungsstellung in die Heizstellung vorgespannt wird.

Der Extraktionszellenhalter weist vorzugsweise einen Aufnahmehalter zur Halterung der Extraktionszelle und einen Handhabungsgriff zum Einschieben und Herausziehen des Extraktionszellenhalters in und aus dem Extraktionssystem auf, wobei wenigstens ein, vorzugsweise 4 Verriegelungszapfen beweglich im Aufnahmehalter geführt sind, die mittels des Handhabungsgriffs relativ zum Aufnahmehalter verstellbar ist. Durch diese Mimik kann die in den Extraktionszellenhalter eingesetzte Extraktionszelle in die Einspannvorrichtung eingeschoben und positioniert werden, während der Verriegelungszapfen mit dem Verriegelungselement in Eingriff kommt und auf diese Weise die Extraktionszelle bzw. den Extraktionszellenhalter in der Verriegelungsstellung festhält bis er durch die Betätigung des Auslöseelements wieder freigegeben wird.

In einer weiteren Ausgestaltung der Erfindung kann zwischen dem Aufnahmehalter und dem Handhabungsgriff des Extraktionszellenhalters eine Schutzplatte vorgesehen werden, die als Hitze- oder Berstschutz dient. Auf diese Weise können Extraktionszellen, die für die Extraktion auf hohe Temperaturen aufgeheizt wurden, bereits frühzeitig wieder herausgenommen werden, da etwaige Strahlungswärme abgehalten wird. Für den ungewöhnlichen Fall, dass eine Extraktionszelle bersten sollte, könnte die Schutzplatte verhindern, dass Teile der Extraktionszelle bzw. der darin enthaltenen Probe unkontrolliert aus der Einspannvorrichtung herausfliegen bzw. die den Handhabungsgriff umgreifende Hand treffen.

Weitere Ausgestaltungen der Erfindung werden anhand der nachfolgenden Beschreibung und der Zeichnung näher erläutert.

In der Zeichnung zeigen
- Fig. 1: eine schematische Darstellung des erfindungsgemäßen Extraktionssystems,
- Fig. 2: eine schematische Seitenansicht des Extraktionszellenhalters und der Extraktionszelle,
- Fig. 3: eine teilweise geschnittene Seitenansicht des Extraktionszellenhalters und der Extraktionszelle,
- Fig. 4: eine teilweise geschnittene Seitenansicht des Extraktionszellenhalters mit eingesetzter Extraktionszelle,
- Fig. 5: eine teilweise geschnittene Draufsicht des Extraktionszellenhalters mit eingesetzter Extraktionszelle,
- Fig. 6: eine dreidimensionale Darstellung der Einspannvorrichtung mit geöffneten Heizbacken,
- Fig. 7: eine Draufsicht der Einspannvorrichtung gemäß Fig. 6,
- Fig. 8: eine teilweise geschnittene Draufsicht der Einspannvorrichtung vor dem Einführen des Extraktionshalters,
- Fig. 9: eine teilweise geschnittene Seitenansicht der Einspannvorrichtung mit eingeführtem Extraktionszellenhalter in einer ersten Schnittebene,
- Fig. 10: eine teilweise geschnittene Seitenansicht der Einspannvorrichtung mit eingeführtem Extraktionszellenhalter in einer zweiten Schnittebene,
- Fig. 11: eine teilweise geschnittene Seitenansicht der Einspannvorrichtung mit eingeführtem Extraktionszellenhalter in einer dritten Schnittebene und
- Fig. 12: eine dreidimensionale Darstellung einer Extraktionszelle mit kleinerem Durchmesser sowie einer Heizbacke mit einem Adapterstück.

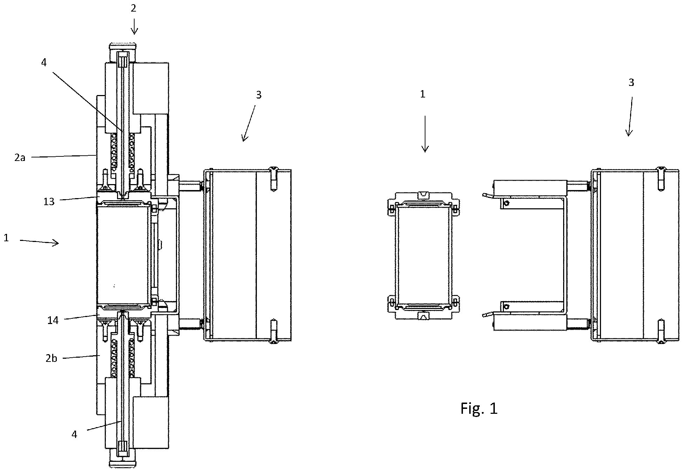

Das in Fig. 1 dargestellte Extraktionssystem zur Extraktion von Analyten von einer Probe weist im Wesentlichen eine Extraktionszelle 1 zur Aufnahme der Probe, eine Einspannvorrichtung 2 zum Einspannen der Extraktionszelle 1 und einen Extraktionszellenhalter 3 zum Aufnehmen der Extraktionszelle 1, um diese in die Einspannvorrichtung 2 einzuschieben und zu positionieren.

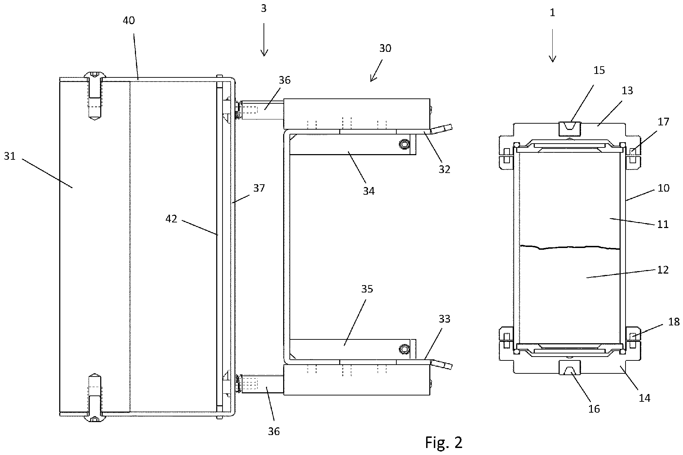

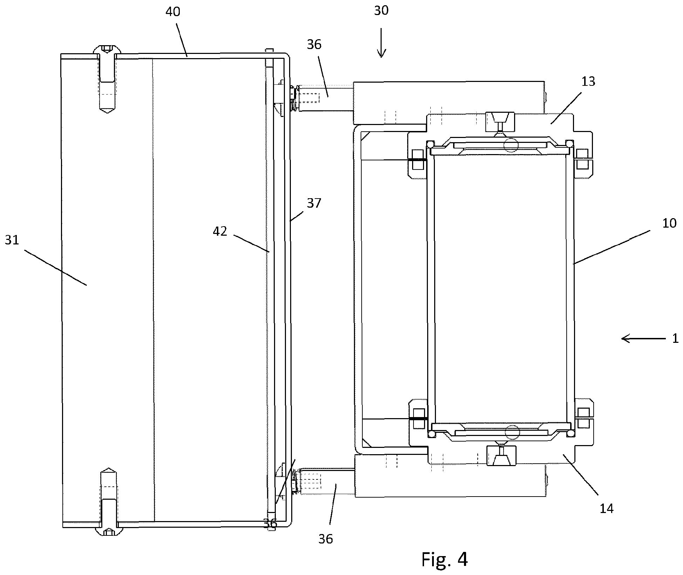

Anhand der Fig. 1 bis Fig. 5 wird im Folgenden die Extraktionszelle 1 und der Extraktionszellenhalter 3 näher erläutert.

Die Extraktionszelle 1 weist einen rohrförmigen Extraktionskörper 10 mit einem ersten und einem gegenüberliegenden zweiten Ende auf, der einen Innenraum 11 zur Aufnahme einer Probe 12 vorsieht. Weiterhin ist eine erste Verschlussanordnung 13 zum abdichtenden Verschließen des ersten Endes des rohrförmigen Extraktionskörpers 10 und eine zweite Verschlussanordnung 14 zum abdichtenden Verschließen des zweiten Endes des rohrförmigen Extraktionskörpers 10 vorgesehen. Die erste Verschlussanordnung 13 weist einen ersten Fluidanschluss 15 zum Zu- oder Abführen eines Fluids auf. In entsprechender Weise sieht die zweite Verschlussanordnung 14 einem zweiten Fluidanschluss 16 zum Zu- oder Abführen eines Fluids vor. Die beiden Verschlussanordnungen 13, 14 sind in geeigneter Weise am rohrförmigen Extraktionskörper 10 befestigt. Dies kann beispielsweise durch eine herkömmliche Schraubverbindung geschehen. Vorzugsweise sind jedoch zwischen dem Extraktionskörper 10 und der ersten Verschlussanordnung 13 sowie zwischen dem Extraktionskörper 10 und der zweiten Verschlussanordnung 14 jeweils wenigstens eine Haftanordnung 17, 18 zum Festhalten der ersten und zweiten Verschlussanordnung 13, 14 am Extraktionskörper 10 vorgesehen. Für nähere Ausgestaltungen der bevorzugten Ausgestaltung der Extraktionszelle 10 mit Haftanordnungen 17, 18 wird auf die EP 20 172 899.5 der Anmelderin verwiesen.

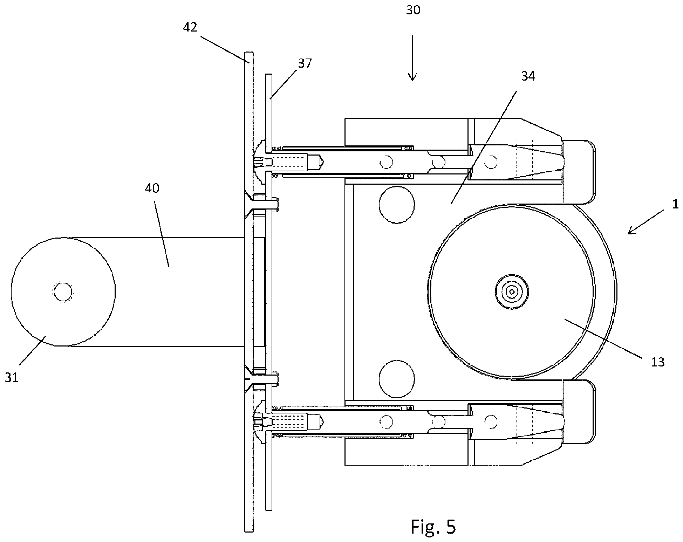

Der Extraktionszellenhalter 3 weist einen Aufnahmehalter 30 zur Halterung der Extraktionszelle 1 und einen Handhabungsgriff 31 zum Einschieben und Herausziehen des Extraktionszellenhalters 3 in und aus dem Extraktionssystem auf. Der Aufnahmehalter 30 sieht zur Aufnahme des rohrförmigen Extraktionskörpers 10 eine obere Aufnahmeschiene 32 und eine untere Aufnahmeschiene 33 vor, die mit einem oberen Aufnahmebereich 34 bzw. einen unteren Aufnahmebereich 35 ausgestattet sind, die jeweils in der Draufsicht gemäß Fig. 5 halbkreisförmig ausgespart sind. Die beiden Aufnahmebereiche 34, 35 kommen bei eingesetzter Extraktionszelle 1 mit der ersten bzw. zweiten Verschlussanordnung 13, 14 in Reibkontakt, um die Extraktionszelle 1 für den Transfer in die Einspannvorrichtung 2 festzuhalten. Die halbkreisförmig ausgesparten Aufnahmebereiche 34, 35 dienen außerdem zur exakten Positionierung der Extraktionszelle 1 innerhalb des Extraktionszellenhalters 3.

Zum Einsetzen der Extraktionszelle 1 in den Extraktionszellenhalter 3 wird die Extraktionszelle 1 lediglich manuell in die beiden Aufnahmebereiche 34, 35 gedrückt. Es ist im Rahmen der Erfindung aber auch denkbar, dass der Extraktionszellenhalter an einem Roboterarm befestigt ist und die Aufnahme der Extraktionszelle und der Transfer in und aus der Einspannvorrichtung automatisiert erfolgt.

Zur Verriegelung des Exaktaktionszellenhalters 3 (mit eingesetzter Extraktionszelle) in der Einspannvorrichtung 2 weist der Extraktionszellenhalter mehrere, insbesondere vier beweglich in Bohrungen 41 des Aufnahmehalters 30 geführte Verriegelungszapfen 36 auf. Die Verriegelungszapfen 36 sind hierfür mit einem aus den Aufnahmebehälter 30 herausstehenden Ende an einer Befestigungsplatte 37 mittels Schrauben 38 befestigt. Jeder Verriegelungszapfen 36 wirkt mit sich im Aufnahmebehälter 30 abstützenden Auswurffedern 39 zusammen. Der Handhabungsgriff 31 ist über Arme 40 mit der Befestigungsplatte 37 verbunden, sodass die Verriegelungszapfen 36 durch eine Relativbewegung des Handgriffs 31 gegenüber dem Aufnahmebehälter 30 unter Stauchung der Auswurffedern 39 in den Aufnahmehalter 30 einschiebbar sind.

Zwischen der Befestigungsplatte 37 und dem Handhabungsgriff 31 ist weiterhin eine Schutzplatte 42 angeordnet, die sich sowohl in der Seitenansicht als auch in der Draufsicht über die Ausdehnung des Aufnahmebehälters 30 hinauserstreckt. Die Schutzplatte 42 dient insbesondere als Hitze- und/oder Berstschutz für die Fälle, dass die Extraktionszelle nach der Extraktion noch relativ heiß sein sollte oder bersten sollte. Der Hitze- und/oder Berstschutz wird im dargestellten Ausführungsbeispiel noch dadurch verbessert, dass sich auch die Befestigungsplatte 37 bis über den Umfang des Aufnahmehalters 30 erstreckt und mit Abstand zur Schutzplatte 42 parallel zu dieser angeordnet ist. Zwischen Handhabungsgriff 31 und der Schutzplatte 42 ist ein ausreichender Abstand vorhanden, um den Extraktionszellenhalter 3 zu greifen.

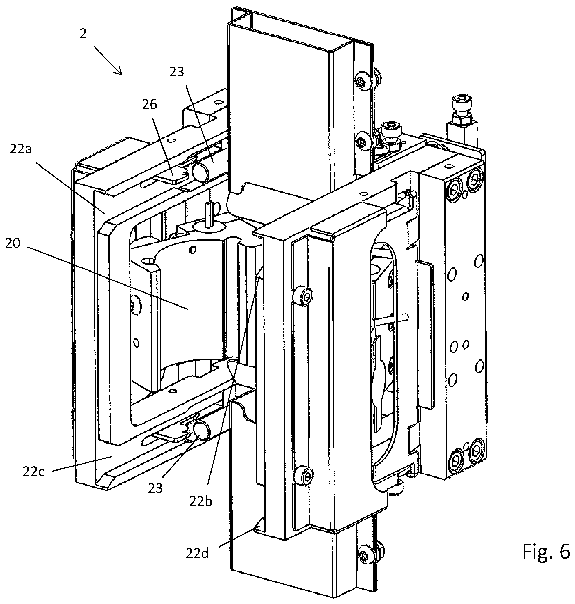

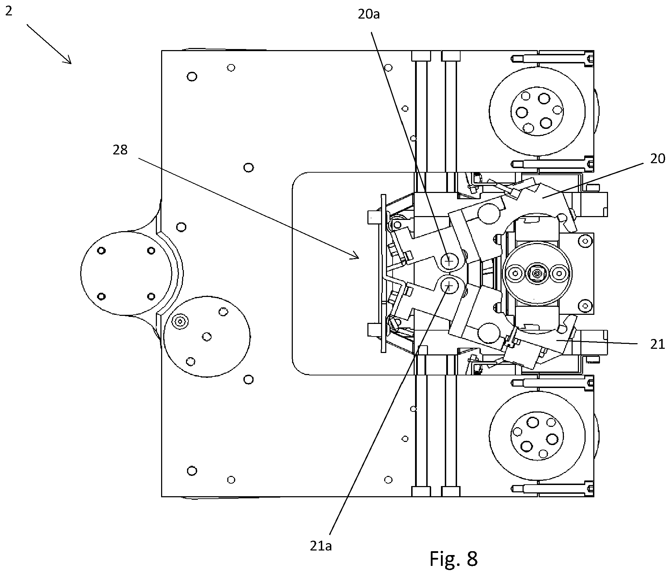

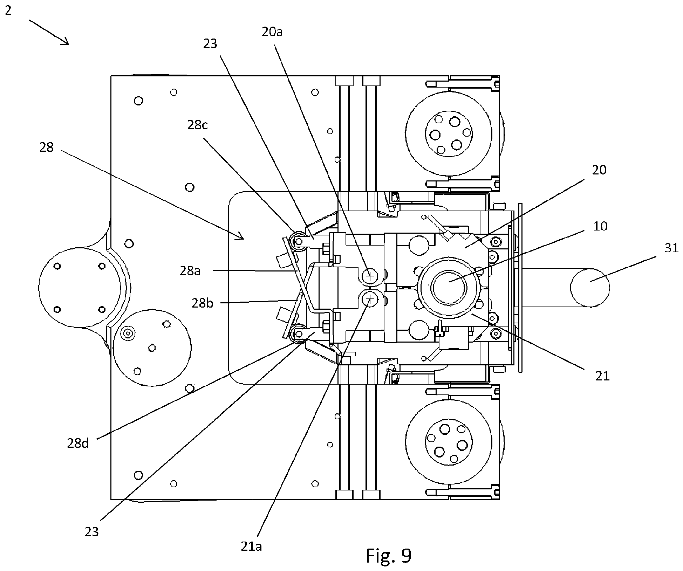

In Fig. 6 bis Fig. 11 ist die Einspannvorrichtung 2 in verschiedenen Ansichten dargestellt. Fig. 6 bis 8 zeigen dabei insbesondere die Situation bevor der Extraktionszellenhalter 3 zusammen mit der Extraktionszelle 1 in die Einspannvorrichtung 2 eingeführt wird. Dabei sind insbesondere zwei halbschalenförmig ausgebildete Heizbacken 20, 21 ersichtlich, die um Drehachsen 20a bzw. 21a drehbar gehaltert sind. In den Fig. 9 bis 11 ist die Situation mit eingeführtem und verriegeltem Extraktionszellenhalter 3 dargestellt, in welcher sich die Heizbacken 20, 21 in ihrer Heizstellung befinden, in der sie die Extraktionszelle 1 bzw. dessen rohrförmigen Extraktionskörper 10 formschlüssig umschließen.

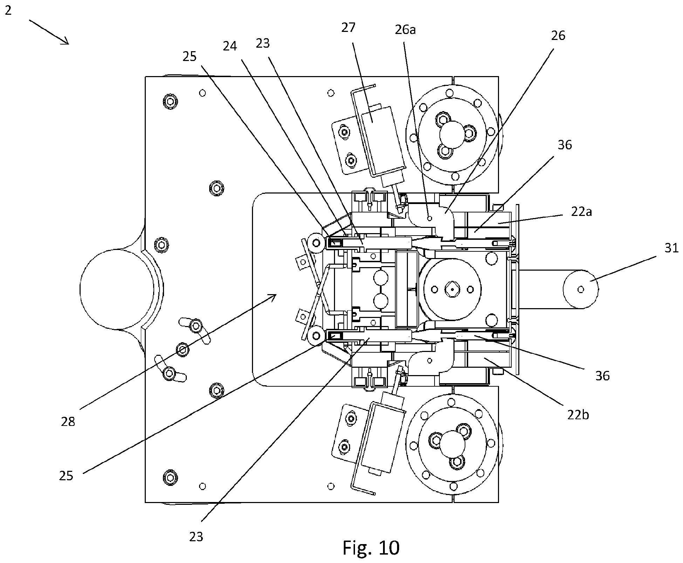

Das Einführen des Extraktionszellenhalters 3 in die Einspannvorrichtung 2 wird durch eine Führungs- und Positionierungsanordnung 22 vorgesehen, von der in Fig. 6 eine obere Führungsschiene 22a, 22b sowie untere Führungsschienen 22c, 22d ersichtlich sind, die mit dem Extraktionszellenhalter 3 und insbesondere dessen Aufnahmehalter 30 in Führungskontakt kommen, um den Extraktionszellenhalter 3 in einer linearen Bewegung in die Einspannvorrichtung 2 einschieben zu können. Während des linearen Einführens des Extraktionshalters 3 in die Einspannvorrichtung 2 kommen die Verriegelungszapfen 36 in ihrer Verlängerung mit Druckstiften 23 in Kontakt, die in Bohrungen 24 geführt sind (Fig. 10). Um etwaige Längentoleranzen bei der Fertigung auszugleichen, wirken die Druckstifte 23 mit Federn 25 zusammen.

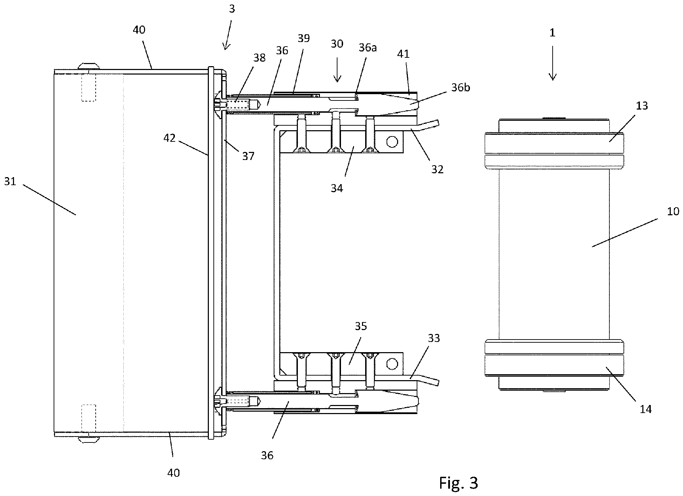

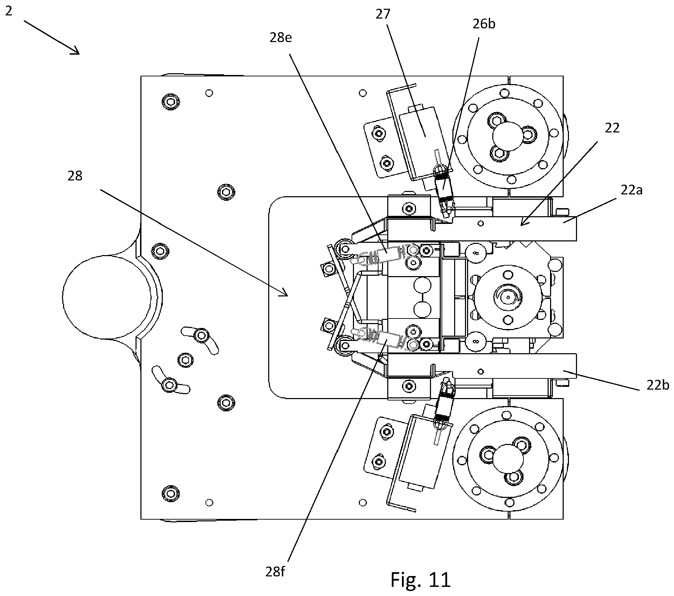

Der Extraktionszellenhalter 3 lässt sich mit seinem Aufnahmehalter 30 soweit in die Einspannvorrichtung 2 einschieben bis Verriegelungselemente 26 mit den Verriegelungszapfen 36 in einer Verriegelungsstellung kommt, in der das Verriegelungselement 26 in eine Hinterschneidung 36a (Fig. 3) des Verriegelungszapfens 36 eingreift. Hierzu ist das Verriegelungselement 26 um eine Achse 26a drehbar gelagert (Fig. 10) und wird durch Federelemente 26b in die Verriegelungsstellung gedrückt (Fig. 11). Die hierfür erforderliche Vorspannung der Federelemente 26b wird beim Einschieben des Extraktionszellenhalters 3 durch den angeschrägten vorderen Bereich 36b des Verriegelungszapfen 36 erreicht (Fig. 3), indem dieser das Verriegelungselement 26 in die vorgespannte Stellung dreht, bis die Hinterschneidung 36a des Verriegelungselement passiert wird, wodurch das Verriegelungselement in die Hinterschneidung 36a durch die Kraft des Federelements 26b einschnappt. Eine entsprechende Verriegelung erfolgt bei allen vier Verriegelungszapfen 36 die mit entsprechenden Verriegelungselementen 26 zusammenwirken.

Um das Verriegelungselement 26 von der in Fig. 10 gezeigten Verriegelungsstellung in eine Öffnungsstellung zu bringen, ist ein Auslöseelemente 27 vorgesehen, das beispielweise durch einen Elektromagneten gebildet wird, der eine Drehung des Verriegelungselementes 26 um die Achse 26a bewirkt, sodass das Verriegelungselement 26 außer Eingriff mit der Hinterschneidung 36a des Verriegelungszapfen 36 kommt. Die während der Einschubbewegung des Extraktionszellenhalters komprimierten Auswurffedern 39 bewirken dann eine Verschiebung der Verriegelungszapfen 36 relativ zum Aufnahmehalter 30, sodass sich auch der Handhabungsgriff 31 entsprechend nach außen bewegt. Der Extraktionszellenhalter 3 ist dann in dieser Stellung freigegeben und kann am Handhabungsgriff 3 manuell oder automatisiert herausgezogen werden.

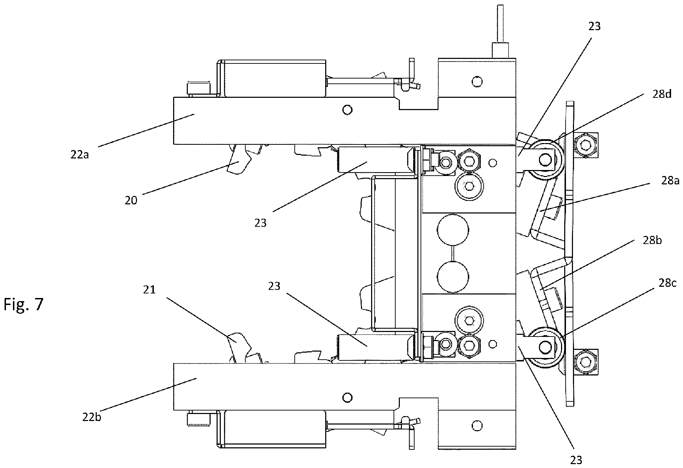

Zum Verstellen der Heizbacken von der in Fig. 6 bis Fig. 8 gezeigten Öffnungsstellung in die in Fig. 9 bis Fig. 11 gezeigte Heizstellung ist eine Verstellmechanik 28 vorgesehen, die hier für jede Heizbacke 20, 21 ein mehrfach gekantetes starres Gestänge 28a bzw. 28b umfasst, das mit einem Ende fest mit der zugeordneten Heizbacke 20 bzw. 21 verbunden ist. Das andere Ende der Gestänge 28a, 28b kommt mit den axial verstellbaren Druckstiften 23 in Kontakt. Die Druckstifte 23 weisen hierzu an dem der Verriegelungszapfen entgegengesetzten Ende Kugellager 28c, 28d auf, die bei einer Bewegung der Druckstifte 23 auf dem mit diesem in kontaktstehenden Gestänge 28a bzw. 28b abrollen und dabei eine Drehung der Heizbacken 20, 21 um ihre Drehachsen 20a, 20b bewirken (Fig. 7, 9 und 10). Bei der Schließbewegung der Heizbacken 20, 21 werden Federn 28e, 28f vorgespannt, die beim Entriegeln der Verriegelungselemente 26 durch das Auslöseelement 27 und die dadurch freigegebenen Druckstifte 23 ein selbsttätiges Öffnen der Heizbacken 20, 21 bewirkt.

Die lineare Einschubbewegung des Extraktionszellenhalters bewirkt somit eine automatische und rein mechanisch ausgeführte Positionierung der Extraktionszelle sowie eine Verriegelung des Extraktionszellenhalters. Gleichzeitig werden die Heizbacken 20, 21 von ihrer Öffnungsstellung in ihre Heizstellung geschwenkt, in der sie die Extraktionszelle formschlüssig umschließen und dadurch eine gute Wärmeübertragung gewährleisten. Lediglich zum Entriegeln kann ein elektrischer Impuls zur Betätigung des Auslöseelements vorgesehen werden. Aber auch hier wäre eine rein mechanisch wirkende Entriegelung durch einen Druckknopf denkbar.

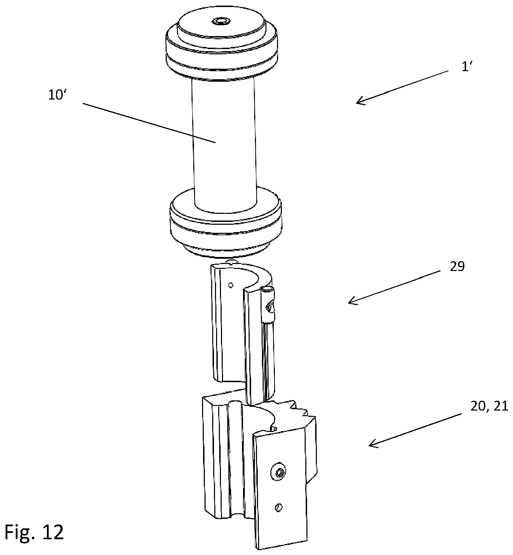

Fig. 12 zeigt eine optionale Ausgestaltung, bei der die Einspannvorrichtung auch für Extraktionszellen 1' mit kleinerem Durchmesser zum Einsatz kommen kann. Hierzu sind für die Heizbacken 20, 21 Adapterstücke 29 vorgesehen, um eine formschlüssige Verbindung mit einer Extraktionszelle 1' zu ermöglichen, die einen rohrförmigen Extraktionskörper 10' mit einem kleineren Durchmesser aufweist. Zur Befestigung der Adapterstücke 29 werden diese beispielsweise auf die Heizbacken 20, 21 aufgeschoben. Auf diese Weise können die Heizbacken an unterschiedliche Durchmesser der Extraktionskörper angepasst werden.

Sobald die Extraktionszelle 1 mit Hilfe des Extraktionszellenhalters 3 in der Einspannvorrichtung 2 positioniert ist (Fig. 1), wird die Extraktionszelle 1 mit Hilfe von Spannbacken 2a und 2b von oben und unten eingespannt, wobei die Spannbacken 2a, 2b in an sich bekannter Art und Weise mit der ersten bzw. zweiten Verschlussanordnung 13, 14 der Extraktionszellen 1 in Kontakt kommen und die für die Anwendung erforderliche Druckabdichtung gewährleisten. Gleichzeitig wird die Fluidverbindungseinrichtung 4 an den ersten bzw. zweiten Fluidanschluss 15, 16 der Extraktionszelle 1 angeschlossen, um anschließend die an sich bekannte Extraktion von Analyten aus der Probe durchzuführen.

## Patentansprüche

1. Extraktionssystem zur Extraktion von Analyten aus einer Probe mit
- einer Extraktionszelle (1) zur Aufnahme der Probe (12), die wenigstens einen ersten Fluidanschluss (15) zum Zu- oder Abführen eines Fluids aufweist und
- einer Einspannvorrichtung (2) zum Einspannen der Extraktionszelle (1) und
- einer Fluidverbindungseinrichtung (4) zur Herstellung einer Fluidverbindung mit dem wenigstens einen ersten Fluidanschluss (15) der Extraktionszelle (1),
wobei ein Extraktionszellenhalter (3) zum Aufnehmen der Extraktionszelle (1) vorgesehen ist und die Einspannvorrichtung (2) eine Führungs- und Positionierungsanordnung (22) zum linearen Einschieben des Extraktionszellenhalters (3) zusammen mit der Extraktionszelle (1) aufweist, um die Extraktionszelle (1) in einer Einschubstellung zu positionieren
**dadurch gekennzeichnet, dass** das Extraktionssystem wenigstens zwei zwischen einer Öffnungsstellung und einer Heizstellung verstellbare Heizbacken (20, 21) aufweist, die in der Heizstellung mit der Extraktionszelle (1) in Heizkontakt stehen.

2. Extraktionssystem nach Anspruch 1, **dadurch gekennzeichnet, dass** die Extraktionszelle (1) einen rohrförmigen Extraktionskörper (10) mit einem ersten und einem gegenüberliegenden zweiten Ende aufweist, der einen Innenraum (11) zur Aufnahme der Probe (12) vorsieht und die Extraktionszelle (1) weiterhin eine erste Verschlussanordnung (13) zum abdichtenden Verschließen des ersten Endes des rohrförmigen Extraktionskörpers (10) und eine zweite Verschlussanordnung (14) zum abdichtenden Verschließen des zweiten Endes des rohrförmigen Extraktionskörpers 10 aufweist.

3. Extraktionssystem nach Anspruch 2, **dadurch gekennzeichnet, dass** die erste Verschlussanordnung (13) den ersten Fluidanschluss (15) und die zweite Verschlussanordnung (14) einen zweiten Fluidanschluss (16) zum Zu- oder Abführen eines Fluids aufweisen.

4. Extraktionssystem nach Anspruch 1, **dadurch gekennzeichnet, dass** der Extraktionszellenhalter (3) einen Aufnahmehalter (30) zur Halterung der Extraktionszelle (1) und einen Handhabungsgriff (31) zum Einschieben und Herausziehen des Extraktionszellenhalters (3) in und aus dem Extraktionssystem aufweist,

5. Extraktionssystem nach Anspruch 1, **dadurch gekennzeichnet, dass** die Führungs-und Positionierungsanordnung (22) wenigstens ein Verriegelungselement (26) aufweist, das in der Einschubstellung des Extraktionszellenhalters (3) mit diesem in einer Verriegelungsstellung steht.

6. Extraktionssystem nach Anspruch 5, **dadurch gekennzeichnet, dass** wenigstens ein Auslöseelement (27) zum Verstellen des Verriegelungselements (26) von der Verriegelungsstellung in eine Öffnungsstellung vorgesehen ist.

7. Extraktionssystem nach Anspruch 1, **dadurch gekennzeichnet, dass** die Extraktionszelle (1) zylindrisch und die Heizbacken (20, 21) halbschalenartig ausgebildet sind, sodass die Heizbacken (20, 21) die Extraktionszelle (1) in der Heizstellung formschlüssig umschließen.

8. Extraktionssystem nach Anspruch 1, **dadurch gekennzeichnet, dass** zur Anpassung der wenigstens zwei Heizbacken (20, 21) an kleinere Durchmesser der Extraktionszellen Adapterstücke (29) vorgesehen sind, die zur Befestigung an den wenigstens zwei Heizbacken (20, 21) ausgebildet sind.

9. Extraktionssystem nach Anspruch 1, **dadurch gekennzeichnet, dass** eine Verstellmechanik (28) zum Verstellen der Heizbacken (20, 21) vorgesehen ist, die während des linearen Einschiebens des Extraktionszellenhalters (3) mit diesem zum Verstellen der Heizbacken (20, 21) von der Öffnungsstellung in die Heizstellung in Wirkkontakt steht.

10. Extraktionssystem nach Anspruch 1, **dadurch gekennzeichnet, dass** die Heizeinrichtung wenigstens ein Federelement (28e, 28f) zum Öffnen der Heizbacken (20, 21) von der Heizstellung in die Öffnungsstellung aufweist, wobei das wenigstens eine Federelement (28e, 28f) derart angeordnet ist, dass es bei der Verstellung der Heizbacken (20, 21) von der Öffnungsstellung in die Heizstellung vorgespannt wird.

11. Extraktionssystem nach Anspruch 9, **dadurch gekennzeichnet, dass** jeder der verstellbaren Heizbacken (20, 21) um eine Drehachse (20a, 21a) drehbar gehaltert ist und die Verstellmechanik (28) die lineare Einschubbewegung des Extraktionszellenhalters in eine Drehung der Heizbacken (20, 21) um ihre Drehachsen (20a, 21a) umsetzt.

12. Extraktionssystem nach Anspruch 5, **dadurch gekennzeichnet, dass** der Extraktionszellenhalter (3) wenigstens einen Verriegelungszapfen (36) aufweist, der in der Einschubstellung des Extraktionszellenhalters (3) mit dem wenigstens einen Verriegelungselement (26) in Verriegelungseingriff steht.

13. Extraktionssystem nach Anspruch 12, **dadurch gekennzeichnet, dass** der Extraktionszellenhalter (3) einen Aufnahmehalter (30) zur Halterung der Extraktionszelle (1) und einen Handhabungsgriff (31) zum Einschieben und Herausziehen des Extraktionszellenhalters (3) in und aus dem Extraktionssystem aufweist, wobei der wenigstens eine Verriegelungszapfen (36) beweglich im Aufnahmehalter (30) geführt ist, der mittels des Handhabungsgriffs (31) relativ zum Aufnahmehalter (30) verstellbar ist.

14. Extraktionssystem nach Anspruch 13, **dadurch gekennzeichnet, dass** der Extraktionszellenhalter (3) zwischen dem Aufnahmehalter (30) und dem Handhabungsgriff (31) eine Schutzplatte (42) als Hitze- und/oder Berstschutz aufweist.

## Claims

1. An extraction system for extracting analytes from a sample, having
- an extraction cell (1) for receiving the sample (12), which has at least one first fluid connector (15) for the supply or discharge of a fluid, and
- a clamping device (2) for clamping the extraction cell (1), and
- a fluid connection device (4) for establishing a fluid connection with the at least one first fluid connector (15) of the extraction cell (1),
whereby an extraction cell holder (3) is provided for receiving the extraction cell (1), and the clamping device (2) has a guiding and positioning arrangement (22) for linearly inserting the extraction cell holder (3), together with the extraction cell (1), in order to position the extraction cell (1) in an insertion position,
**characterized in that** the extraction system has at least two heating jaws (20, 21) which can be moved between an open position and a heating position, and which are in heating contact with the extraction cell (1) in the heating position.

2. The extraction system according to claim 1, **characterized in that** the extraction cell (1) has a tubular extraction element (10) with a first end and an opposite second end, which provides an interior space (11) for receiving the sample (12), and the extraction cell (1) furthermore has a first closure arrangement (13) for closing and sealing the first end of the tubular extraction element (10), and a second closure arrangement (14) for closing and sealing the second end of the tubular extraction element 10.

3. The extraction system according to claim 2, **characterized in that** the first closure arrangement (13) has the first fluid connector (15), and the second closure arrangement (14) has a second fluid connector (16) for the supply or discharge of a fluid.

4. The extraction system according to claim 1, **characterized in that** the extraction cell holder (3) has a receiving holder (30) for holding the extraction cell (1), and has a manipulating handle (31) for inserting the extraction cell holder (3) into the extraction system and pulling it out of the same.

5. The extraction system according to claim 1, **characterized in that** the guiding and positioning arrangement (22) has at least one locking element (26) which, when the extraction cell holder (3) is in the inserted position, is in a locking position therewith.

6. The extraction system according to claim 5, **characterized in that** at least one release element (27) is provided for moving the locking element (26) from the locking position into an open position.

7. The extraction system according to claim 1, **characterized in that** the extraction cell (1) is cylindrical, and the heating jaws (20, 21) are designed as half-shells, such that the heating jaws (20, 21) enclose the extraction cell (1) in a form-fitting manner in the heating position.

8. The extraction system according to claim 1, **characterized in that** adapter pieces (29) are provided for adapting the at least two heating jaws (20, 21) to smaller extraction cell diameters, and are designed for attachment to the at least two heating jaws (20, 21).

9. The extraction system according to claim 1, **characterized in that** a displacement mechanism (28) for moving the heating jaws (20, 21) is provided, which has an operative connection with the extraction cell holder (3) during the linear insertion thereof, in order to move the heating jaws (20, 21) from the open position into the heating position.

10. The extraction system according to claim 1, **characterized in that** the heating device has at least one spring element (28e, 28f) for opening the heating jaws (20, 21) from the heating position to the open position, the at least one spring element (28e, 28f) being arranged in such a way that it is preloaded when the heating jaws (20, 21) are moved from the open position into the heating position.

11. The extraction system according to claim 9, **characterized in that** each of the movable heating jaws (20, 21) is rotatably mounted about an axis of rotation (20a, 21a), and the displacement mechanism (28) converts the linear insertion movement of the extraction cell holder into a rotation of the heating jaws (20, 21) around their axes of rotation (20a, 21a).

12. The extraction system according to claim 5, **characterized in that** the extraction cell holder (3) has at least one locking pin (36) which is in locking engagement with the at least one locking element (26) in the inserted position of the extraction cell holder (3).

13. The extraction system according to claim 12, **characterized in that** the extraction cell holder (3) has a receiving holder (30) for holding the extraction cell (1), and has a manipulating handle (31) for inserting the extraction cell holder (3) into the extraction system and pulling it out of the same, wherein the at least one locking pin (36) is movably guided in the receiving holder (30), and can be moved relative to the receiving holder (30) by means of the manipulating handle (31).

14. The extraction system according to claim 13, **characterized in that** the extraction cell holder (3) has a protective plate (42) as heat and/or burst protection between the receiving holder (30) and the manipulating handle (31).

## Revendications

1. Système d'extraction servant à l'extraction d'analytes à partir d'un échantillon, ledit système d'extraction comprenant :
- une cellule d'extraction (1) servant au logement de l'échantillon (12) qui présente au moins une première connexion de fluide (15) prévue pour l'arrivée ou l'évacuation d'un fluide, et
- un dispositif de serrage (2) servant au serrage de la cellule d'extraction (1) et
- un dispositif de connexion fluidique (4) pour réaliser une connexion fluidique avec l'au moins une première connexion de fluide (15) de la cellule d'extraction (1),
où il est prévu un support de cellule d'extraction (3) servant à loger la cellule d'extraction (1), et le dispositif de serrage (2) présente un système de guidage et de positionnement (22) servant à insérer de façon linéaire le support de cellule d'extraction (3) ainsi que la cellule d'extraction (1), afin de positionner la cellule d'extraction (1) dans une position d'insertion, **caractérisé en ce que** le système d'extraction présente au moins deux mâchoires chauffantes (20, 21) déplaçables entre une position d'ouverture et une position de chauffage, lesquelles mâchoires chauffantes, dans la position de chauffage, sont en contact chauffant avec la cellule d'extraction (1).

2. système d'extraction selon la revendication 1, **caractérisé en ce que** la cellule d'extraction (1) présente un corps d'extraction (10) de forme tubulaire comprenant une première extrémité et une seconde extrémité opposée, lequel corps d'extraction dispose d'un espace intérieur (11) servant au logement de l'échantillon (12), et la cellule d'extraction (1) présente en outre un premier système d'obturation (13) servant à obturer de façon étanche la première extrémité du corps d'extraction (10) de forme tubulaire et présente un second système d'obturation (14) servant à obturer de façon étanche la seconde extrémité du corps d'extraction (10) de forme tubulaire.

3. système d'extraction selon la revendication 2, **caractérisé en ce que** le premier système d'obturation (13) présente la première connexion de fluide (15) et le second système d'obturation (14) présente une seconde connexion de fluide (16), lesdites connexions de fluide étant prévues pour l'arrivée ou l'évacuation d'un fluide.

4. système d'extraction selon la revendication 1, **caractérisé en ce que** le support de cellule d'extraction (3) présente un support de logement (30) servant à la fixation de la cellule d'extraction (1) et présente une poignée de manipulation (31) servant à insérer et à retirer le support de cellule d'extraction (3) dans et hors du système d'extraction.

5. système d'extraction selon la revendication 1, **caractérisé en ce que** le système de guidage et de positionnement (22) présente au moins un élément de verrouillage (26) qui, dans la position d'insertion du support de cellule d'extraction (3), est dans une position de verrouillage avec celui-ci.

6. système d'extraction selon la revendication 5, **caractérisé en ce qu'**il est prévu au moins un élément de déclenchement (27) servant à déplacer l'élément de verrouillage (26) passant de la position de verrouillage à une position d'ouverture.

7. système d'extraction selon la revendication 1, **caractérisé en ce que** la cellule d'extraction (1) est de forme cylindrique et les mâchoires chauffantes (20, 21) sont en forme de demi-coque, de sorte que les mâchoires chauffantes (20, 21), dans la position de chauffage, entourent la cellule d'extraction (1) par complémentarité de forme.

8. système d'extraction selon la revendication 1, **caractérisé en ce que**, pour l'adaptation des au moins deux mâchoires chauffantes (20, 21) à de plus petits diamètres des cellules d'extraction, il est prévu des éléments adaptateurs (29) qui sont conçus pour être fixés sur les au moins deux mâchoires chauffantes (20, 21).

9. système d'extraction selon la revendication 1, **caractérisé en ce que**, pour le déplacement des mâchoires chauffantes (20, 21), il est prévu un mécanisme de déplacement (28) qui, au cours de l'insertion linéaire du support de cellule d'extraction (3), est en contact actif avec celui-ci afin de déplacer les mâchoires chauffantes (20, 21) passant de la position d'ouverture à la position de chauffage.

10. système d'extraction selon la revendication 1, **caractérisé en ce que** le dispositif de chauffage présente au moins un élément à ressort (28e, 28f) servant à ouvrir les mâchoires chauffantes (20, 21) passant de la position de chauffage à la position d'ouverture, où l'au moins un élément à ressort (28e, 28f) est disposé de manière telle, qu'il est précontraint lors du déplacement des mâchoires chauffantes (20, 21) passant de la position d'ouverture à la position de chauffage.

11. Système d'extraction selon la revendication 9, **caractérisé en ce que** chacune des mâchoires chauffantes (20, 21) déplaçables est fixée de manière à pouvoir tourner autour d'un axe de rotation (20a, 21a), et le mécanisme de déplacement (28) convertit le mouvement d'insertion linéaire du support de cellule d'extraction, en une rotation des mâchoires chauffantes (20, 21) autour de leurs axes de rotation (20a, 21a).

12. Système d'extraction selon la revendication 5, **caractérisé en ce que** le support de cellule d'extraction (3) présente au moins un tourillon de verrouillage (36) qui, dans la position d'insertion du support de cellule d'extraction (3), est en prise de verrouillage avec l'au moins un élément de verrouillage (26).

13. système d'extraction selon la revendication 12, **caractérisé en ce que** le support de cellule d'extraction (3) présente un support de logement (30) servant à la fixation de la cellule d'extraction (1) et présente une poignée de manipulation (31) servant à insérer et à retirer le support de cellule d'extraction (3) dans et hors du système d'extraction, où l'au moins un tourillon de verrouillage (36) est guidé de façon mobile dans le support de logement (30), lequel tourillon de verrouillage peut être déplacé par rapport au support de logement (30), au moyen de la poignée de manipulation (31).

14. Système d'extraction selon la revendication 13, **caractérisé en ce que** le support de cellule d'extraction (3) présente, entre le support de logement (30) et la poignée de manipulation (31), une plaque de protection (42) servant de protection contre la chaleur et/ou l'éclatement.
